# EUROPEAN PATENT APPLICATION

(11) **EP 4 223 601 A1**
(43) Date of publication of application: **09.08.2023**
(21) Application number: 23154673.0
(22) Date of filing: 02.02.2023
(51) Int. Cl.: B60T 17/08

(54) **SPRING BRAKE ACTUATOR COMPRISING A RAM ASSEMBLY WITH A CHECK VALVE**

(30) Priority: 04.02.2022 IN 202241005992
(71) Applicant: ZF Commercial Vehicle Control Systems India Limited, Chennai, Tamil Nadu 600 058 (IN)
(72) Inventor: Arangarasan, Senthil Kumar, 600077 CHENNAI (IN); Sowmiyan, Suresh, 600077 CHENNAI (IN); Mahalingam, Viswanathan, 603001 CHENGALPATTU (IN); Venkatesh, Aravindda Swamy, 600091 CHENNAI (IN); Mani, Arun Kumar, 639006 KARUR (IN)
(74) Representative: Eisenführ Speiser

(57) **Abstract**

The spring brake actuator (1) provides a service brake function and a parking brake function and comprises a housing (2) with a housing base (4), wherein in the housing (2) a compression spring (14) and a ram assembly (10, 11, 28) with a spring brake piston (28) are provided. The ram assembly separates a spring chamber (12), in which the compression spring (14) is disposed, from a parking chamber (16). The spring brake actuator (1) further comprises a check valve (50), which is included in the ram assembly to allow an air flow to the parking chamber (16) in case of a compounding condition, and the check valve (50) comprises a one-way valve, for example a duckbill valve, and a supporting element for securing the one-way valve in the ram assembly.

## Description

The invention relates to a spring brake actuator providing a service brake function and a parking brake function and comprising a ram assembly with a check valve.

A spring brake actuator of this kind is widely used in compressed air brake systems of large vehicles, for example of commercial vehicles like heavy trucks, buses and trailers. The spring brake actuator is operated using compressed air provided by a compressed-air supply container, which is filled by a compressor. The spring brake actuator comprises one or more pressure chambers and at least one diaphragm, which moves a push rod to operate a disc brake or a drum brake of the vehicle when the pressure chamber is filled with compressed air during a braking action being initiated by a respective driver of a vehicle.

The spring brake actuator typically contains a compression spring providing a force for actuating the parking brake function. The compression spring force acts on a parking piston, or a second diaphragm, via which the push rod is actuated. The compression spring can be compressed by a force appearing on the parking piston by applying compressed air in a parking chamber, which is the normal driving state of the vehicle. When the compressed air is released from the parking chamber, the compression spring expands and shifts the parking piston, which results in the activation of the brake and locking of the vehicle. The service brake function can be operated independently in the normal driving state, by applying compressed air in a service chamber of the spring brake actuator.

Double function brake actuators of this kind combining a service brake function with a parking brake function are known, for example, as TRISTOP^{™} brake actuators.

WO 2012/164587 A2 discloses a spring brake actuator providing a service brake function and a spring brake function and comprising a ram assembly with a check valve according to the preamble of claim 1. The check valve is, for example, an umbrella type check valve and allows a breathing between a service chamber and a spring chamber.

It is an object of the present invention to provide a spring brake actuator having a lower manufacturing cost or an easier manufacturing.

The invention is as set out in the independent claims 1 and 15. Preferred embodiments are defined by the dependent claims.

The spring brake actuator provides a service brake function and a parking brake function and comprises a housing with a housing base, wherein in the housing a compression spring and a ram assembly with a spring brake piston are provided. The ram assembly separates a spring chamber, in which the compression spring is disposed, from a parking chamber. The compression spring is enabled to act on the ram assembly to provide the parking brake function, in which case the spring brake piston is shifted through a hole of the housing base in the direction of a diaphragm, which causes a braking action via a push rod. The spring brake actuator further comprises a check valve, which is included in the ram assembly to allow an air flow to the parking chamber, and the check valve comprises a one-way valve and a supporting element for securing the one-way valve in the ram assembly. For example, the one-way valve may be a duckbill valve.

In a preferred embodiment, the supporting element comprises a ring element with an opening at one side and a tapered part at its opposing side, wherein the tapered part includes a central venting hole, which is connected at a tip of the tapered part to one or a plurality of side holes, to allow an air flow through the supporting element.

In another preferred embodiment, the supporting element comprises a ring element with an opening at one side and a tapered part at its opposing side, wherein the tapered part includes at least one coaxial hole, off a central axis of the supporting element, which extends through the tapered part to allow an air flow through the supporting element.

The supporting element advantageously fixes the one-way valve in a hole of the ram assembly and provides a reinforcement and a retainment of the one-way valve to improve a backflow resistance of the one-way valve.

In a preferred embodiment, the one-way valve is a duckbill valve and the tapered part has a profile, in particular a cone or a wedge profile, corresponding with a shape of elastomeric lips of the duckbill valve.

In another preferred embodiment, the one-way valve is a metal bonded duckbill valve, and the supporting element has a form of a ring element and fixes the duckbill valve in a hole of the ram assembly. The metal bonded duckbill valve provides a high backflow resistance. Therefore, a further reinforcement of the supporting element is not required for the metal bonded duckbill valve.

The supporting element is advantageously fitted into the ram assembly by means of a press fitting, a snap fit, a threaded fastening, an adhesive bonding, a shrink fitting or a riveting.

In another preferred embodiment, the ram assembly and the compression spring are located within the housing base and a first housing cover.

In another preferred embodiment, the spring brake actuator comprises a second housing cover, a service chamber and a service brake spring, wherein the diaphragm is located within the housing base and the second housing cover between the service chamber and the service brake spring.

In another preferred embodiment, the ram assembly comprises a further diaphragm and a support piston, wherein the support piston comprises a valve seat, in which the one-way valve is fixed by the supporting element.

The spring brake actuator is in particular a double diaphragm brake actuator or a spring brake actuator comprising a parking piston with a valve seat, in which the one-way valve is fixed by the supporting element.

In another preferred embodiment, the spring brake actuator comprises a second housing cover, wherein the diaphragm is located within the housing base and the second housing cover between a service chamber and a service brake spring of the spring brake actuator.

In another preferred embodiment, the housing base separates a parking brake part from a service brake part.

In another preferred embodiment, the spring brake actuator is a TRISTOP^{™} brake actuator.

In another preferred embodiment, the spring brake actuator is a component of a compressed air brake system of a vehicle.

One advantage of a duckbill valve over other types of one-way valves is that the duckbill valve is self-contained, i.e., the critical sealing function is an integral part of the one-piece elastomeric component, as opposed to other valves where a sealing element has to engage with a smooth seat surface to form a seal. The duckbill valve can be easily incorporated and assembled in a hole of a support piston or a parking piston of the ram assembly without any problems associated with a surface finish quality of a mating seat and does not require a complex assembly process.

The check valve comprises only two parts, a duckbill valve and a supporting element, and allows an easier assembly in the ram assembly of the spring brake actuator with regard to a prior art solution. It provides further a more robust design, as compared with the solution being currently on use. A further advantage of the check valve is that the threshold opening pressure of the duckbill valve is lower than the threshold opening pressure of an umbrella-type valve element.

The invention further defines a utility vehicle comprising a respective spring brake actuator.

Preferred embodiments of the disclosure are explained in more detail below by way of example with reference to schematic drawings, which show:
- Figs. 1a, 1b: a spring brake actuator comprising a check valve comprising a one-way valve, in a cross-sectional view and in a front view;
- Figs. 2a-2d: a duckbill valve in various views;
- Fig. 2e, 2f: an operation of the duckbill valve of Fig. 2a;
- Fig. 3: a first preferred embodiment of the check valve;
- Fig. 4: a second preferred embodiment of the check valve;
- Fig. 5: a third preferred embodiment of the check valve;
- Fig. 6a - 6d: an operation of the check valve of Fig. 3;
- Fig. 7: a support element with a check valve according to prior art; and
- Figs. 8a, 8b: an operation of the check valve of Fig. 7.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for instructional purposes to aid the reader in understanding the principles of the disclosure and the concepts contributed by the inventors to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof.

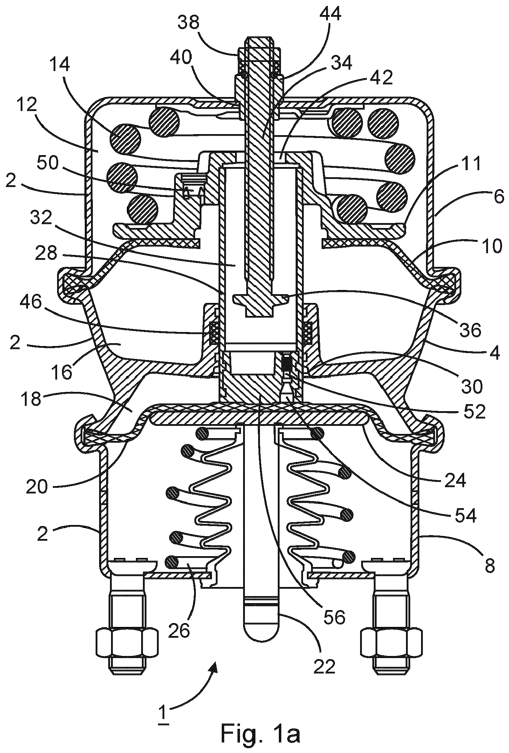

In Fig. 1a a spring brake actuator 1 is schematically depicted in a cross-sectional view, comprising a housing 2 with a housing base 4, a first cylindrical housing cover 6 and a second cylindrical housing cover 8. Within the housing base 4 and the first housing cover 6, a ram assembly with a first diaphragm 10 and a support piston 11 is provided. The first diaphragm 10 separates a spring chamber 12, in which a compression spring 14 is located, from a parking chamber 16. The compression spring 14 acts on the first diaphragm 10 via the support piston 11 and tries to push the first diaphragm 10 in the direction of the housing base 4. When the parking chamber 16 is filled with compressed air, the first diaphragm 10 is moved into the direction of the compression spring 14, compressing the compression spring 14. When the compressed air is released from the parking chamber 16, the compression spring 10 shifts the first diaphragm 10 in the direction of the parking chamber 16.

Within the housing base 4 and the second housing cover 8, a second diaphragm 20 is provided, which is located between a service chamber 18 and a service brake spring 26. The second diaphragm 20 is enabled to shift a push rod 22 via a push rod plate 24 for providing a braking action. The push rod 22 is coupled, for example, with a disc brake, not shown in Fig. 1a, and in case the service chamber 18 is filled with compressed air, the second diaphragm 20 moves the push rod 22 via the push rod plate 24, which actuates the disc brake and also compresses the service brake spring 26. When the compressed air is released from the service chamber 18, the service brake spring 26 pushes the second diaphragm 20 back, which releases the disc brake.

The compression spring 14 is in this embodiment a compressible cylindrical power spring and rests with one side at the first housing cover 6 and with its other side at the support piston 11. The ram assembly further comprises a spring brake piston 28 being connected with the support piston 11, and when the compression spring 14 shifts the first diaphragm 10 via the support piston 11, the spring brake piston 28 is moved by the support piston 11 through a hole 30 of the housing base 4 in the direction of the second diaphragm 20, which results in a movement of the second diaphragm 20 and the push rod plate 24 in the direction of the service brake spring 26, providing a braking action via the push rod 22.

The spring brake piston 28 is hollow like a tube, having a cavity 32. The spring brake actuator 1 further comprises a mechanical release mechanism with an integrated release bolt 34 having a bolt head 36 and a static nut 38. The release bolt 34 extends from the outside of the spring brake actuator 1 through a hole 40 of the first housing cover 6 and a hole 42 of the support piston 11 into the cavity 32 of the spring brake piston 28. The bolt head 36 is mounted at a first end of the release bolt 34, inside the cavity 32 of the spring brake piston 28. The release bolt 34 is screwed with a thread into a boss 44, which is fixed within the hole 40 of the first housing cover 6. The boss 44 comprises a hollow inner cylindrical portion with an internal thread, which carries the release bolt 34 via the thread of the release bolt 34. The static nut 38 is screwed on the release bolt 34 at an outside end of the release bolt 34 and is fixedly attached to the release bolt 34.

The spring brake actuator 1 is usable in particular for a large vehicle, for example for a commercial vehicle. The spring brake actuator 1 provides a service brake function and a spring brake function and operates as follows: When the vehicle is running, the parking chamber 16 is filled with compressed air, but not the service chamber 18, so that the disc brake of the vehicle is not effective. Any braking action of the vehicle can then be provided by a driver of the vehicle via a brake pedal, which, when pushed, results in filling the service chamber 18 with compressed air. The second diaphragm 20 then moves the push rod plate 24 in the direction of the service brake spring 26, which shifts the push rod 22 and activates the disc brake. The braking action ends when the driver releases the brake pedal, which results that the compressed air is released from the service chamber 18 with the effect that the push rod 22, the push rod plate 24 and the second diaphragm 20 are shifted back by the service brake spring 26, which unlocks the disc brake. Fig. 1a depicts the spring brake actuator 1 in a driving position.

When the vehicle is stopped and its engine is switched off, the driver can release the compressed air from the parking chamber 16 to lock the disc brake. The compression spring 14 then expands and as a result, it shifts the spring brake piston 28 via the support piston 11 in the direction of the second diaphragm 20, which moves the second diaphragm 20 in the direction of the service brake spring 26, causing the activation of the disc brake and locking of the vehicle. When the engine of the vehicle is switched on again, the disc brake can be unlocked by the driver by filling the parking chamber 16 with compressed air, which effects that the first diaphragm 10 is pushed back until the compression spring 14 is fully compressed. The brake is then released and the vehicle is ready for driving.

The spring brake actuator 1 further comprises a valve element 52 in a hole 54 of a bottom 56 of the spring brake piston 28 to allow an air flow from the service chamber 18 to the cavity 32 of the spring brake piston 28 and further to the spring chamber 12. The valve element 52 is also known as an internal breather device or an internal breather valve (IBV). The spring brake actuator 1 also comprises a sealing 46, which is provided between walls of the hole 30 of the housing base 4 and the spring brake piston 28 to prevent a pressure equalisation between the parking chamber 16 and the service chamber 18.

The spring brake actuator 1 in addition comprises a check valve 50, which is included in this embodiment within the support piston 11. The check valve 50 comprises a one-way valve and allows a pressure equalization from the spring chamber 12 to the parking chamber 16.

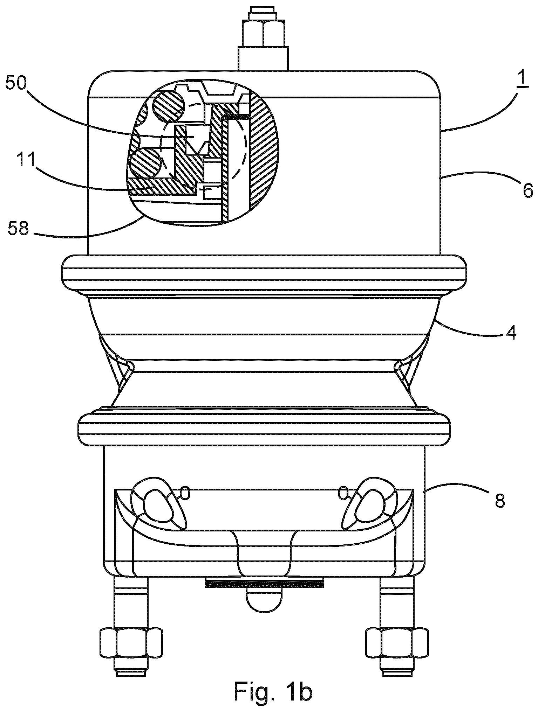

Fig. 1b shows the spring brake actuator 1 in a front view, with a schematical opening 58 to depict the check valve 50, as disposed in the support piston 11, within the spring brake actuator 1.

The spring brake actuator 1 is a double function brake actuator including a parking brake part and a service brake part, wherein the parking brake part comprises the compression spring 14, the parking chamber 16, the spring chamber 12 and the ram assembly with the first diaphragm 10, the support piston 11 and the spring brake piston 28 within the first housing cover 6 and the housing base 4, and wherein the service brake part comprises the second diaphragm 20, the service brake spring 26 and the service chamber 18 within the second housing cover 8 and the housing base 4.

It may occur that the service brake function is applied when the disc brake is already locked by the parking brake function. Applying the service brake and the parking brake together is called a compounding braking. This can result in damaged components of the disc brake and possibly a failure of the disc brake.

A compounding braking occurs, for example, when a driver stops his vehicle on a hill and pushes the brake pedal of the vehicle to hold the vehicle, and in addition activates the parking brake function before he switches off the engine of the vehicle and releases the brake pedal. When activating the parking brake function, the compressed air is released from the parking chamber 16, which allows the compression spring 14 inside the spring chamber 12 to push the push rod 22 via the spring brake piston 28, which sets the disc brake of the vehicle. This happens while the pressurized service chamber 18 is already pushing the push rod 22 to set the brake. This combined force of spring brake and service brake forces is additive and puts an excessive force on the disc brake, which can lead to a failure of components of the disc brake.

To avoid any damage by a compounding braking, the check valve 50 allows an air flow from the service chamber 18 via the spring chamber 12 to the parking chamber 16, which in such a case reduces the air pressure within the service chamber 18, and therefore, reduces the force of the second diaphragm 20 on the push rod 22. This occurs, for example, in the spring brake actuator 1, when the service brake function is applied after the parking brake function is already applied.

The valve element 52 exists to avoid a slow pressure built-up in the service chamber 18 by depleting the air through the check valve 50 and in turn into the parking chamber 16 and in turn into the atmosphere through the air brake system of the vehicle. The open/close status of the valve element 52 is dependent on the rate of pressure build-up and pressure differential between the service chamber 18 and the parking chamber 16 at any given instant of time.

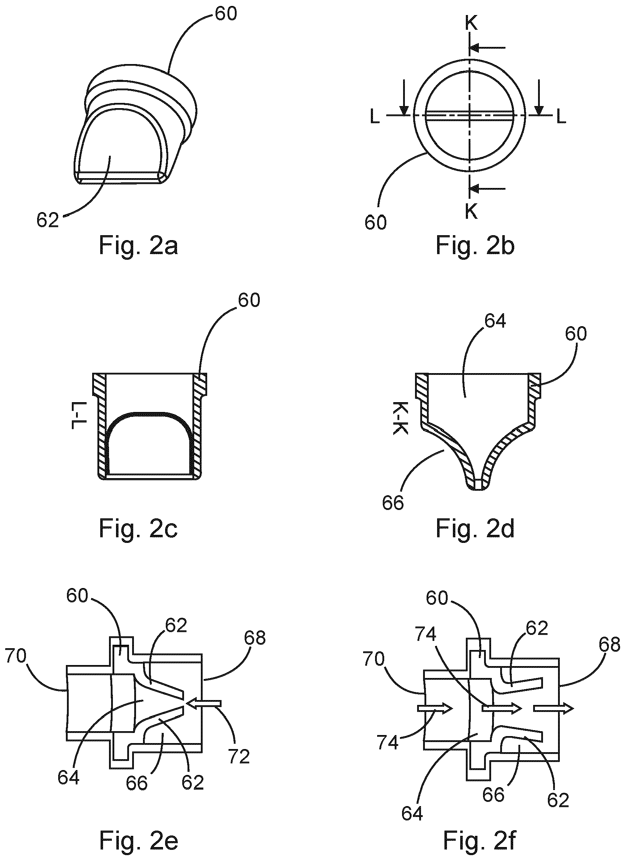

The check valve 50 includes a one-way valve. For example, the one-way valve may be a duckbill valve 60, as depicted in Fig. 2a. Fig. 2b shows the duckbill valve 60 in a top view, and Figs. 2c and 2d in two cross-sectional views. The duckbill valve 60 is a one-piece, elastomeric component that acts as a one-way valve preventing a backflow. It has elastomeric lips 62 with a shape of duckbill lips, which allow only a forward flow from an inside 64 of the duckbill valve 60 to an outside 66 of the duckbill valve 60. One advantage of the duckbill valve 60 over other types of one-way valves is that the duckbill valve is self-contained, i.e., the critical sealing function is an integral part of the one-piece elastomeric component, as opposed to other valves where a sealing element has to engage with a smooth seat surface to form a seal. The duckbill valve 60 can be easily incorporated and assembled in the support piston 11 of the ram assembly without any problems associated with a surface finish quality of a mating seat and does not require a complex assembly process.

Fig. 2e shows the duckbill valve 60 in a situation when an air pressure is higher at a port 68 in comparison to a port 70. The elastomeric lips 62 of the duckbill valve 60 in this case prevent any air flow in the direction of an arrow 72 through the duckbill valve 60, because the air pressure is higher at the outside 66 of the duckbill valve 60 with regard to the inside 64 of the duckbill valve 60.

Fig. 2f shows the duckbill valve 60 in a situation when the air pressure is lower at the port 68 with regard to the port 70. The elastomeric lips 62 of the duckbill valve 60 open and allow in this case an air flow in the direction of arrows 74, through the duckbill valve 60, because the air pressure is higher at the inside 64 with regard to the outside 66 of the duckbill valve 60.

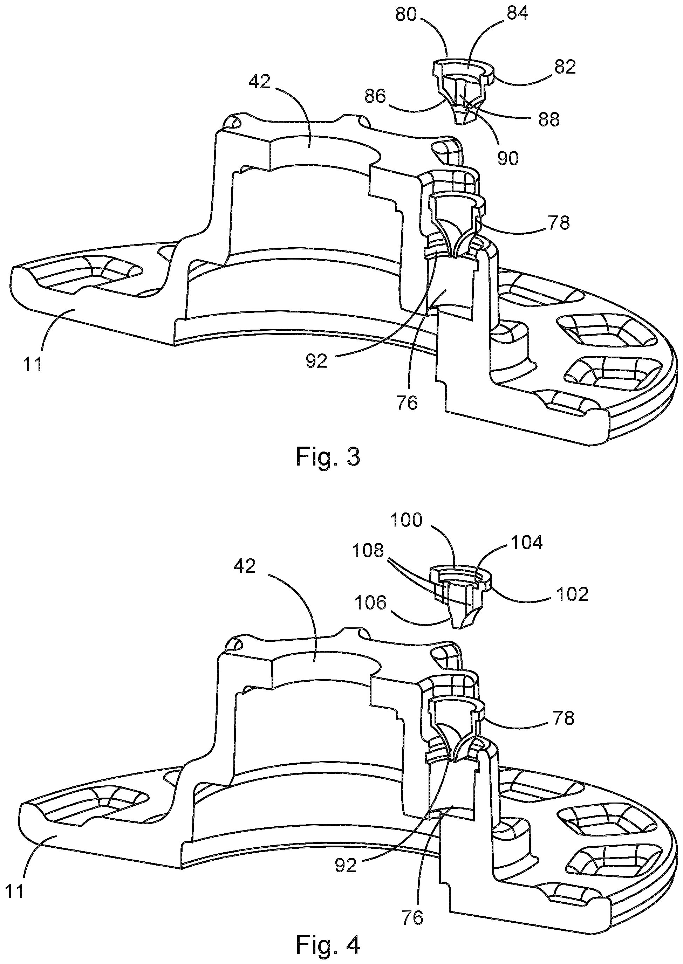

The support piston 11 is depicted, together with the check valve 50, enlarged and in an exploded view in Fig. 3. The support piston 11 comprises a second hole 76 to allow an airflow from the spring chamber 12 through the support piston 11 to the parking chamber 16. The check valve 50 in this embodiment includes in addition to a duckbill valve 78 a first supporting element 80 comprising a ring element 82 with an opening 84 at one side and a tapered part 86 at its opposing side. The tapered part 86 comprises a central venting hole 88, which is connected at a tip of the tapered part 86 to one or a plurality of side holes 90, to allow an air flow through the tapered part 86 and correspondingly through the duckbill valve 78. The ring element 82 can be designed as a separate component as well.

The duckbill valve 78 is placed in a valve seat 92 of the second hole 76, and the first supporting element 80 secures the duckbill valve 78 in the hole 76 of the support piston 11. The first supporting element 80 is fixed in the hole 76 tightly, for example using a press fitting or by screwing the first supporting element 80 into a thread of the second hole 76. Alternatively, a snap fit, an adhesive bonding, a shrink fitting or a riveting is used for fixing the duckbill valve 78 with the first supporting element 80 in the hole 76 of the support piston 11.

With the assembly of the duckbill valve 78 and the first supporting element 80 in the support piston 11, only an air flow from the service chamber 18 via the valve element 52 and the spring chamber 12 to the parking chamber 16 is allowed. The tapered part 86 of the first supporting element 80 has in particular a cone or a wedge profile similar to the elastomeric lips 62 of the duckbill valve 78, to support the backflow resistance of the duckbill valve 78.

Another preferred embodiment of the check valve 50 is shown in Fig. 4. The check valve 50 in this embodiment comprises the duckbill valve 78 and a second supporting element 100, which comprises a ring element 102 at one side with an opening 104 and a tapered part 106 at its opposing side. The tapered part 106 has an outside shape equal or similar to the first supporting element 80 but includes one or a plurality of coaxial holes 108, which are located off a central axis of the second supporting element 100 and which holes 108 pass straight through the second supporting element 100 to allow an airflow through the second supporting element 100. The ring element 102 can be designed as a separate component as well.

The second supporting element 100 fixes the duckbill valve 78 tightly in the valve seat 92 of the hole 76, after the duckbill valve 78 is placed in the hole 76, and the tapered part 106 of the second supporting element 100 supports the backflow resistance of the duckbill valve 78. The second supporting element 100 is fixed in the hole 76, for example using a press fitting or by screwing the second supporting element 100 into a thread of the hole 76. Alternatively, a snap fit, an adhesive bonding, a shrink fitting or a riveting is used for fixing the duckbill valve 78 in the hole 76 of the support piston 11.

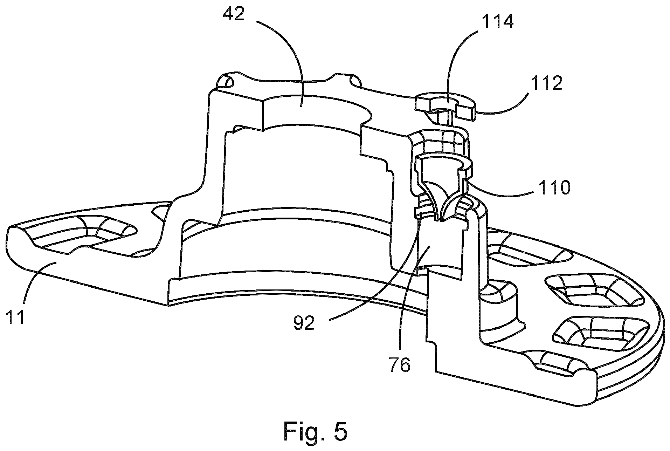

A further preferred embodiment of the check valve 50 is shown in Fig. 5. The check valve 50 in this embodiment includes a metal bonded duckbill valve 110 and a third supporting element 112 having the form of a ring element. The third supporting element 112 comprises a central hole 114 and fixes the duckbill valve 110 within the valve seat 92 of the hole 76 of the support piston 11 tightly, so that only an airflow from the spring chamber 12 to the parking chamber 16 is possible. The metal within the duckbill valve 100 improves the backflow resistance of the duckbill valve 100, so that a stabilizing function, as provided by the first supporting element 80 or the second supporting element 100, is not required.

The third supporting element 112 secures the duckbill valve 110 in the valve seat 92 of the hole 76, after the duckbill valve 110 is mounted in the hole 76. The third supporting element 112 is fixed in the hole 76, for example by using a press fitting or by screwing the third supporting element 110 into a thread of the hole 76. Alternatively, a snap fit, an adhesive bonding, a shrink fitting or a riveting is used for fixing the duckbill valve 110 in the hole 76 of the support piston 11.

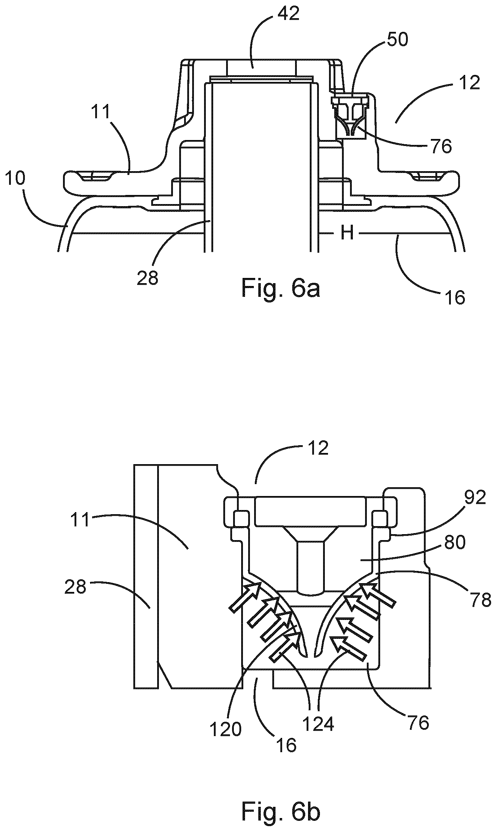

The operation of the check valve 50 is now described with regard to Figs. 6a -6d. Fig. 6a schematically shows details of the ram assembly with the first diaphragm 10, the support piston 11, the spring brake piston 28, the check valve 50 in accordance with first embodiment as shown in Fig. 3, the spring chamber 12 and the parking chamber 16. Fig. 6b shows the check valve 50 of Fig. 6a enlarged in more detail. The duckbill valve 78 is placed in the valve seat 92 of the hole 76 and secured by the first supporting element 80.

Figs. 6a and 6b show a situation in which the parking chamber 16 is pressurized, pressure H, because the parking brake function is not actuated. The service chamber 18 is not pressurized. This is the case, for example, when the vehicle is driving on a road. The pressure in the spring chamber 12 is then lower than the pressure in the parking chamber 16. The pressure of the parking chamber 16 therefore acts on an outside 120 of the duckbill valve 78 being directed to the parking chamber 16, because the hole 76 is open to the parking chamber 16. The duckbill valve 78 is, therefore, closed. The pressure on the outside 120 of the duckbill valve 78, caused by the pressurized parking chamber 16, is indicated by arrows 122.

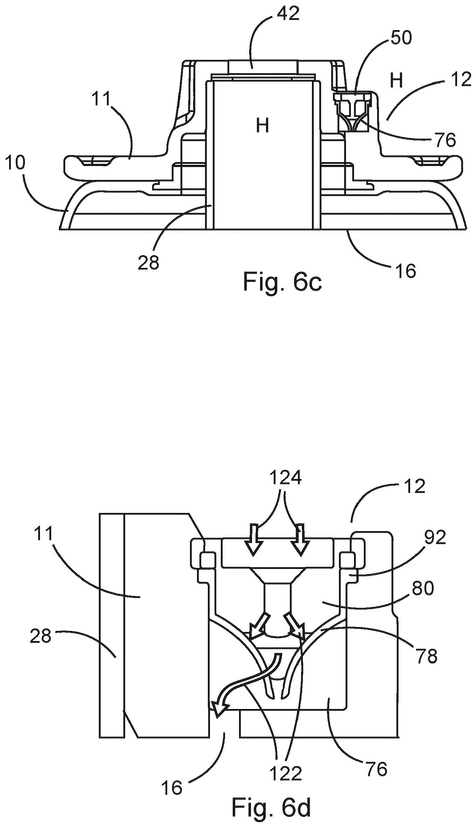

Fig. 6c again schematically shows details of the ram assembly with the first diaphragm 10, the support piston 11, and the spring brake piston 28, the check valve 50 in accordance with first embodiment as shown in Fig. 3, the spring chamber 12 and the parking chamber 16. Fig. 6d shows the check valve 50 of Fig. 6c enlarged in more detail. The duckbill valve 78 is placed in the valve seat 92 of the hole 76 and secured by the first supporting element 80.

Figs. 6c and 6d illustrate a situation with a compounding condition, in which the service brake function is actuated together with the parking brake function. The pressure in the parking chamber 16 is then low, for example about 0 bar, but the pressure in the spring chamber 12 is high, pressure H, because the pressure in the service chamber 18 is high, in which case the valve element 54 opens, and an air flow from the service chamber 18 via the valve element 54 and the cavity 32 of the spring brake piston 28 to the spring chamber 12 takes place. The elastomeric lips of the duckbill valve 78 therefore open in this situation and allow an air flow from the service chamber 18 via the valve element 52 and the spring chamber 12 to the parking chamber 16. The air flow is indicated by arrows 124. The air pressure in the service chamber 18 is, therefore, reduced in this compounding situation and correspondingly, the force on the push rod 22 is also reduced.

The spring brake actuator 1 is in particular a double diaphragm type brake actuator. In another preferred embodiment, the spring brake actuator 1 comprises a parking piston instead of the first diaphragm 10, wherein the parking piston separates the spring chamber 12 from the parking chamber 16.

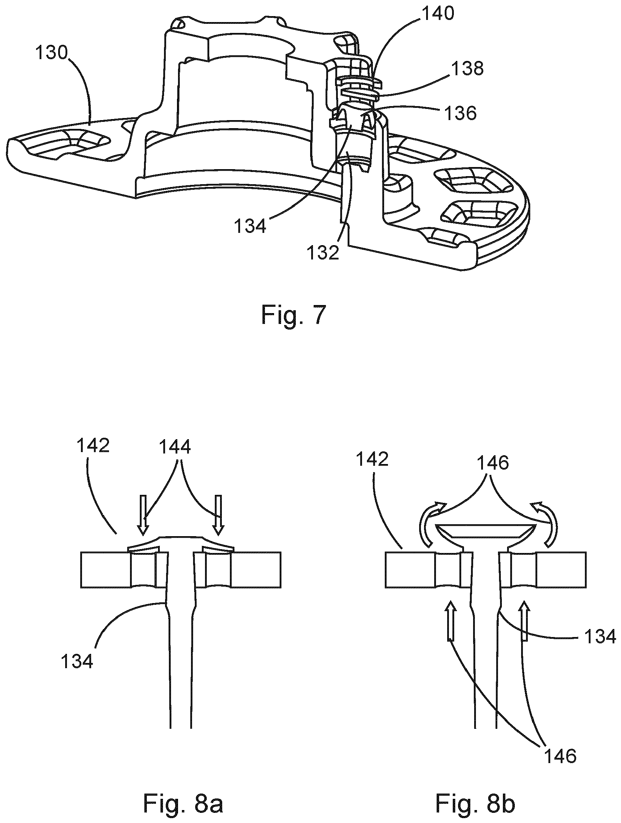

Fig. 7 depicts a support element 130 comprising a hole 132, in which a check valve 134 according to prior art is disposed. The check valve 134 comprises an umbrella-type valve element 136, which is fixed in the hole 132 by using a retainer plate 138 and a circlip 140. The umbrella-type valve element 136 includes a sealing elastomeric diaphragm, which is shaped as a disk or an umbrella, and which is used as a backflow prevention device.

Figs. 8a, 8b show an operation of the check valve 134 of Fig. 7. If the pressure is higher at an umbrella side 142 of the umbrella-type valve element 136, indicated by arrows 144, the check valve 134 is closed, as shown in Fig. 8a. If the pressure is lower at the umbrella side 142, the check valve 134 is open, as indicated by arrows 146 in Fig. 8b.

The check valve 50 comprises only two parts, a duckbill valve and a supporting element, and allows an easier assembly in the ram assembly of the spring brake actuator 1 with regard to the prior art solution. It also provides a more robust design, as compared with the solution being currently in use. A further advantage of the check valve 50 is that the threshold opening pressure of the duckbill valve is lower than the threshold opening pressure of the umbrella-type valve element.

Also other embodiments may be utilized by one skilled in the art without departing from the scope of the present disclosure. The disclosure resides therefore in the claims herein after appended.

### List of Reference signs (part of the specification):

- 1: spring brake actuator
- 2: housing
- 4: housing base
- 6: first housing cover
- 8: second housing cover
- 10: first diaphragm
- 11: support piston
- 12: spring chamber
- 14: compression spring
- 16: parking chamber
- 18: service chamber
- 20: second diaphragm
- 22: push rod
- 24: push rod plate
- 26: service brake spring
- 28: spring brake piston
- 30: hole of the housing base
- 32: cavity
- 34: release bolt
- 36: bolt head
- 38: static nut
- 40: hole of the first housing cover
- 42: hole of the support piston
- 44: boss
- 46: sealing
- 50: check valve
- 52: valve element
- 54: hole of the bottom 56
- 56: bottom
- 58: opening of the spring brake actuator
- 60: duckbill valve
- 62: elastomeric lips
- 64: inside of the duckbill valve 60
- 66: outside of the duckbill valve 60
- 68, 70: ports
- 72, 74: arrows
- 76: second hole of the support piston
- 78: duckbill valve
- 80: first supporting element
- 82: ring element of the first supporting element
- 84: opening
- 86: tapered part
- 88: central hole
- 90: side holes
- 92: valve seat
- 100: second supporting element
- 102: ring element of the second supporting element
- 104: opening
- 106: tapered part
- 108: coaxial holes
- 110: metal bonded duckbill valve
- 112: third supporting element
- 114: hole of the supporting element 112
- 120: outside of the duckbill valve 60
- 122, 124: arrows
- 130: support element
- 132: hole
- 134: check valve according to prior art
- 136: umbrella-type valve
- 138: retainer plate
- 140: circlip
- 142: umbrella side of the umbrella-type valve
- 144, 146: arrows
- H: high pressure

## Claims

1. A spring brake actuator (1) providing a service brake function and a parking brake function and comprising a housing (2) with a housing base (4), wherein
in the housing (2) a compression spring (14) and a ram assembly (10, 11, 28) with a spring brake piston (28) are provided, the ram assembly (10, 11, 28) separating a spring chamber (12), in which the compression spring (14) is disposed, from a parking chamber (16),
the compression spring (14) is enabled to act on the ram assembly (10, 11, 28) to provide the parking brake function, in which case the spring brake piston (28) is shifted through a hole (30) of the housing base (6) in the direction of a diaphragm (20) causing a braking action via a push rod (22),
and wherein the spring brake actuator (1) further comprises a check valve (50), which is included in the ram assembly (10, 11, 28) to allow an air flow to the parking chamber (16), **characterized in that**
the check valve (50) comprises a one-way valve (60, 78, 110) and a supporting element (80, 100, 112) for securing the one-way valve (60, 78, 110) in the ram assembly (10, 11, 28).

2. The spring brake actuator (1) of claim 1, wherein the one-way valve is a duckbill valve (60, 78, 110).

3. The spring brake actuator (1) of claim 2, wherein the supporting element (80) comprises a ring element (82) with an opening (84) at one side and a tapered part (86) at its opposing side, and wherein the tapered part (86) includes a central venting hole (88), which is connected at a tip of the tapered part (84) to one or a plurality of side holes (90), to allow an air flow through the supporting element (80), and wherein the tapered part (86) has in particular a cone or a wedge profile corresponding with a shape of elastomeric lips (62) of the duckbill valve (60, 78).

4. The spring brake actuator (1) of claim 2, wherein the supporting element (100) comprises a ring element (102) with an opening (104) at one side and a tapered part (106) at its opposing side, and wherein the tapered part (106) includes at least one coaxial hole (108), off a central axis of the supporting element (100), which extends through the tapered part (106) to allow an air flow through the supporting element (100), and wherein the tapered part (106) has a profile, in particular a cone or a wedge profile, corresponding with a shape of elastomeric lips (62) of the duckbill valve (60, 78).

5. The spring brake actuator (1) of one of claims 2 to 4, wherein the supporting element (80, 100) fixes the duckbill valve (60, 78) in a hole (76) of the ram assembly (10, 11, 28) and provides a reinforcement and a retainment of the duckbill valve (60, 78) to improve a backflow resistance of the duckbill valve (60, 78).

6. The spring brake actuator (1) of one of claims 2 to 5, wherein the supporting element (80, 100) has an outer shape corresponding with an inner shape of the duckbill valve (60, 78).

7. The spring brake actuator (1) of claim 2, wherein the one-way valve is a metal bonded duckbill valve (110), and wherein the supporting element (112) has a form of a ring element and fixes the duckbill valve (110) in a hole of the ram assembly (10, 11, 28).

8. The spring brake actuator (1) of one of the preceding claims, wherein the supporting element (80, 100, 112) is fitted into the ram assembly (10, 11, 28) by means of a press fitting, a snap fit, a threaded fastening, an adhesive bonding, a shrink fitting or a riveting.

9. The spring brake actuator (1) of one of the preceding claims, wherein the ram assembly (10, 11, 28) and the compression spring (14) are located within the housing base (4) and a first housing cover (6).

10. The spring brake actuator (1) of one of the preceding claims, comprising a second housing cover (8), a service chamber (18) and a service brake spring (26), wherein the diaphragm (20) is located within the housing base (4) and the second housing cover (8) between the service chamber (18) and the service brake spring (26).

11. The spring brake actuator (1) of one of the preceding claims, wherein the ram assembly (10, 11, 28) comprises a further diaphragm (10) and a support piston (11), and wherein the support piston (11) comprises a valve seat (92), in which the one-way valve (60, 78, 110) is fixed by the supporting element (80, 100, 112).

12. The spring brake actuator (1) of one of claims 1 to 10, comprising a parking piston, which separates the spring chamber (12) from the parking chamber (16), and which comprises a valve seat, in which the one-way valve (60, 78, 110) is fixed by the supporting element (80, 100, 112).

13. The spring brake actuator (1) of one of the preceding claims, wherein the housing base (4) separates a parking brake part from a service brake part.

14. The spring brake actuator (1) of one of the preceding claims, wherein the spring brake actuator (1) is a component of a compressed air brake system of a commercial vehicle.

15. Commercial vehicle comprising a spring brake actuator (1) according to one of the preceding claims.
